(19) Europäisches Patentamt
European Patent Office
Office européen des brevets

(11) **EP 2 930 478 A1**

(12) **EUROPÄISCHE PATENTANMELDUNG**

(43) Veröffentlichungstag:
14.10.2015   Patentblatt 2015/42

(51) Int Cl.:
**G01G 17/04** (2006.01)      **G01G 19/08** (2006.01)
**G01G 19/04** (2006.01)

(21) Anmeldenummer: 14163705.8

(22) Anmeldetag: **07.04.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens VAI Metals Technologies GmbH**
**4031 Linz (AT)**

(72) Erfinder:
• **Lehofer, Martin**
  **4050 Traun (AT)**

• **Rohrhofer, Andreas**
  **4020 Linz (AT)**
• **Weinzinger, Michael**
  **4020 Linz (AT)**
• **Kuehas, Thomas**
  **4225 Luftenberg (AT)**
• **Fischer, Paul**
  **4020 Linz (AT)**
• **Hartl, Franz**
  **4020 Linz (AT)**

(74) Vertreter: **Maier, Daniel Oliver**
**Siemens AG**
**Postfach 22 16 34**
**80506 München (DE)**

(54)   **Bestimmung der Masse einer metallischen Schmelze**

(57)    Die Erfindung betrifft ein Verfahren zur Bestimmung der Masse ($m_{load}$) einer metallischen Schmelze in einem zur Aufnahme der metallischen Schmelze geeigneten metallurgischen Gefäß (1). Dabei werden Parameter eines mit dem unbefüllten metallurgischen Gefäß (1) beladenen Transportfahrzeuges (3) während einer Beschleunigung des Transportfahrzeuges (3) ermittelt, wobei die Parameter wenigstens eine Geschwindigkeit, eine Beschleunigung und ein Motorantriebsmoment des Transportfahrzeuges (3) umfassen. Ferner werden die Parameter des mit dem mit der metallischen Schmelze befüllten metallurgischen Gefäß (1) beladenen Transportfahrzeuges (3) während einer Beschleunigung des Transportfahrzeuges (3) ermittelt. Mittels der ermittelten Parameter und einer Bewegungsgleichung des aus dem Transportfahrzeug (3), dem metallurgischen Gefäß (1) und der metallischen Schmelze bestehenden Systems wird unter Berücksichtigung von Auslegungsdaten des Transportfahrzeuges (3) die Masse ($m_{load}$) der metallischen Schmelze bestimmt.

FIG 3

EP 2 930 478 A1

**Beschreibung**

Die Erfindung betrifft ein Verfahren zur Bestimmung der Masse einer metallischen Schmelze in einem zur Aufnahme der metallischen Schmelze geeigneten metallurgischen Gefäß.

Bei der Erzeugung von Flüssigmetallschmelzen, beispielsweise in einem Stahlwerk, werden Transportfahrzeuge (Hüttenfahrzeuge) zum Bewegen von Stahlpfannen, Schlackenkübel, Schrottkörben oder Eisenpfannen verwendet. Um das Gewicht der Beladung eines derartigen Behälters zu bestimmen, werden beispielsweise Kraftsensoren, so genannte Wägezellen, im Transportfahrzeug verbaut. Dabei werden Kräfte über Biegungen der Wägezellen erfasst, üblicherweise über Widerstandsänderungen von Dehnungsmessstreifen.

Wägezellen sind jedoch in der Anschaffung teuer. Außerdem sind Wägezellen sehr sensible Messinstrumente, welche durch den Einsatz in den Heißbereichen immer wieder zerstört werden. Ferner ist die Instandhaltung von Wägezellen teuer, da Wägezellen zyklisch nachkalibriert werden müssen. Die Kalibrierung ist nur während eines Stillstandes der Anlage möglich. Zur Kalibrierung müssen Prüfgewichte vorgehalten werden, deren Massen typisch zwischen 10 t und 100 t betragen und die beim Kalibrieren nacheinander auf Prüfbalken aufgelegt werden (Mehrpunktkalibrierung). Die erfassten Istwerte werden mit Sollwerten abgeglichen und das Wiegesystem kalibriert.

Alternativ zu Wägezellen werden aufwändige Wägeplattformen errichtet bzw. in ein Schienensystem integriert. Eine weitere Möglichkeit zur Gewichtsmessung sind Plattformwagen, auf denen Schrottkörbe bzw. Schrottschurren beim Befüllen positioniert und anschließend mithilfe eines Fahrzeugs an einen Zielort gebracht werden. Bei bestimmten Anwendungen ist es ferner möglich, die Wägung an einem Kran vorzunehmen.

Die Integrierung solch einer Sensorik bedeutet für den Anlagenbetreiber einen hohen konstruktiven und finanziellen Aufwand und ist bauartbedingt nicht immer möglich. Bei manchen Anwendungen wie der Wägung anfallender Schlacke in einem Konverter wird deshalb vollständig auf eine Wägevorrichtung verzichtet mit der Folge des Fehlens von Messwerten oder ungenauen Schätzwerten. Die Massen werden jedoch beispielsweise für Prozessmodelle benötigt. Sind die Messwerte ungenau oder nicht vorhanden, rechnen die Modelle mit geringerer Genauigkeit oder sind auf manuelle Eingaben der Bediener angewiesen. Dies erhöht die Ungenauigkeit und die Zuverlässigkeit dieser Modelle, woraus eine Senkung der Produktionsrate resultiert. Fehlerhaft messende Wägevorrichtungen führen beispielsweise dazu, dass Zuschlagsstoffe nicht in der richtigen Menge dosiert werden. Dies führt zu Nachbehandlungen z. B. in der Sekundärmetallurgie, die kurzfristig eingeplant werden müssen und dadurch zu wesentlichen Mehrkosten und geringerer Produktivität führen. Ferner können fehlerhaft messende Wägevorrichtungen zu einer Überfüllung von Gefäßen und als Folge zu einem Überschwappen von Flüssigmetallschmelze aus den Gefäßen führen. Dies stellt ein erhebliches Sicherheitsrisiko für Personen in der Umgebung der Gefäße dar.

Der Erfindung liegt die Aufgabe zugrunde, ein verbessertes Verfahren zur Bestimmung der Masse einer metallischen Schmelze in einem zur Aufnahme der metallischen Schmelze geeigneten metallurgischen Gefäß anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zur Bestimmung der Masse einer metallischen Schmelze in einem zur Aufnahme der metallischen Schmelze geeigneten metallurgischen Gefäß werden Parameter eines mit dem unbefüllten metallurgischen Gefäß beladenen Transportfahrzeuges während einer Beschleunigung des Transportfahrzeuges ermittelt, wobei die Parameter wenigstens eine Geschwindigkeit des Transportfahrzeuges, eine Beschleunigung des Transportfahrzeuges und ein Motorantriebsmoment des Transportfahrzeuges umfassen. Ferner werden die Parameter des mit dem mit der metallischen Schmelze befüllten metallurgischen Gefäß beladenen Transportfahrzeuges während einer Beschleunigung des Transportfahrzeuges ermittelt. Die ermittelten Parameter werden an ein Prozessmodell übergeben und die Masse der metallischen Schmelze wird mittels des Prozessmodells und einer Bewegungsgleichung des aus dem Transportfahrzeug, dem metallurgischen Gefäß und der metallischen Schmelze bestehenden Systems unter Berücksichtigung von Auslegungsdaten des Transportfahrzeuges bestimmt.

Der Begriff der Beschleunigung wird hier und in dem gesamten Dokument in seiner physikalischen Definition einer Geschwindigkeitsänderung verwendet und umfasst damit sowohl Geschwindigkeitsänderungen, die den Betrag einer Geschwindigkeit erhöhen, als auch Geschwindigkeitsänderungen, die den Betrag einer Geschwindigkeit verringern.

Die Erfindung nutzt aus, dass aus der Geschwindigkeit und der Beschleunigung der Bewegung des Transportfahrzeuges und einem diese Bewegung erzeugenden Motorantriebsmoment mittels einer Bewegungsgleichung für diese Bewegung und in die Bewegungsgleichung eingehenden Auslegungsdaten des Transportfahrzeuges die Masse des Transportfahrzeuges ermittelt werden kann, da die Bewegungsgleichung diese Größen (Masse, Geschwindigkeit, Beschleunigung, Motorantriebsmoment) enthält und zueinander in Beziehung setzt.

Erfindungsgemäß werden die Geschwindigkeiten, Beschleunigungen und Motorantriebsmomente jeweils bei dem Transport des unbefüllten und des mit metallischer Schmelze befüllten metallurgischen Gefäßes ermittelt. Mittels der Bewegungsgleichung werden aus den ermittelten Geschwindigkeiten, Beschleunigungen und Motorantriebsmomenten jeweils die Massen des mit dem unbefüllten metallurgischen Gefäß beladenen Transportfahrzeuges und des mit dem befüllten metallurgischen Gefäß beladenen Transportfahrzeuges ermittelt. Aus der Differenz dieser ermittelten Massen wird die Masse der metallischen Schmelze in dem mit ihr befüllten metallurgischen Gefäß ermittelt.

Die Erfindung ermöglicht damit die Bestimmung der Masse einer metallischen Schmelze in einem metallurgischen Gefäß allein aus kinematischen Daten von Transporten des metallurgischen Gefäßes und für diese Transporte benötigten Motorantriebsmomenten sowie Auslegungsdaten des Transportfahrzeuges. Es werden insbesondere vorteilhaft keine kostspieligen und aufwändigen Wägezellen und Prüfgewichte oder eine exponierten Heißbereichen angepasste teure Sensorik benötigt. Damit entfallen auch Kühlluftgebläse zur Begrenzung einer Wägezellentemperatur sowie Nachkalibrierungen der Wägezellen. Das erfindungsgemäße Verfahren ermöglicht ferner eine Kalibrierung durch Leerfahrten während des Produktionsbetriebes, die keine manuelle Eingriffe oder Produktionsstillstände erfordern. Insgesamt ermöglicht das Verfahren eine vergleichsweise einfache, kostengünstige und zuverlässige Bestimmung der Masse einer metallischen Schmelze in einem metallurgischen Gefäß.

Eine Ausgestaltung der Erfindung sieht vor, dass zur Ermittlung des Motorantriebsmomentes ein Motorstrom und/oder eine Motorspannung und/oder eine Motorleistung des Transportfahrzeuges und eine Motordrehzahl des Transportfahrzeuges gemessen oder aus Frequenzumrichterdaten des Transportfahrzeuges ausgelesen werden.

Diese Ausgestaltung der Erfindung nutzt vorteilhaft aus, dass sich ein Motorantriebsmoment aus dem Motorstrom und/oder der Motorspannung und der Motordrehzahl oder einer Antriebsleistung ermitteln lässt und dass sich der Motorstrom und die Motordrehzahl den Frequenzumrichterdaten eines den Motor speisenden Frequenzumrichters entnehmen lassen.

Eine weitere Ausgestaltung der Erfindung sieht vor, dass die Parameter während der Beschleunigung des Transportfahrzeuges mehrmalig ermittelt werden.

Eine mehrmalige Ermittlung der Parameter ermöglicht vorteilhaft eine Reduzierung von Messfehlern durch permanetes Nachkalibrieren und damit eine Verbesserung der Genauigkeit der Massenbestimmung.

Eine weitere Ausgestaltung der Erfindung sieht vor, dass die Masse der metallischen Schmelze während einer Bewegung des mit dem mit der metallischen Schmelze befüllten metallurgischen Gefäß beladenen Transportfahrzeuges bestimmt wird.

Dadurch kann bereits der Transport des mit der metallischen Schmelze befüllten metallurgischen Gefäßes der Befüllung angepasst werden. Insbesondere können die Beschleunigungen des metallurgischen Gefäßes der Befüllung angepasst werden, so dass ein Überschwappen von metallischer Schmelze vermieden wird.

Eine weitere Ausgestaltung der Erfindung sieht vor, dass die Masse der metallischen Schmelze mittels des Prozessmodells und der Bewegungsgleichung mit einer Methode der kleinsten Quadrate oder einer rekursiven Methode der kleinsten Quadrate bestimmt wird.

Diese Methoden ermöglichen insbesondere vorteilhaft eine schnelle und genaue Ermittlung der Masse der metallischen Schmelze wie unten anhand von Ausführungsbeispielen der Erfindung näher erläutert wird.

Eine weitere Ausgestaltung der Erfindung sieht vor, dass die Masse des unbefüllten metallurgischen Gefäßes bestimmt wird und/oder die Masse des unbeladenen Transportfahrzeuges bestimmt wird.

Insbesondere eine wiederholte Ermittlung der Masse des unbefüllten metallurgischen Gefäßes ermöglicht vorteilhaft einen Rückschluss auf den Abnutzungsgrad, insbesondere den Ausmauerungszustand des metallurgischen Gefäßes. Die wiederholte Ermittlung der Masse des unbeladenen Transportfahrzeuges ermöglicht vorteilhaft Rückschlüsse über den Verschmutzungsgrad des Transportfahrzeuges und die Notwendigkeit von Instandhaltungsmaßnahmen.

Dabei wird vorzugsweise ein Identifizierungssystem verwendet, mittels dessen einem metallurgischen Gefäß eine für das unbefüllte metallurgische Gefäß ermittelte Masse zugeordnet wird.

Dies ermöglicht vorteilhaft eine systematische Überwachung der Abnutzungsgrade, insbesondere der Ausmauerungszustände aller metallurgischen Gefäße.

Ferner wird mittels des Identifizierungssystems vorzugsweise ein Verschleiß des metallurgischen Gefäßes überwacht.

Die Überwachung des Verschleißes eines metallurgischen Gefäßes, insbesondere des sich verschlechternden Ausmauerungszustandes, ermöglicht vorteilhaft, die Befüllung eines metallurgischen Gefäßes dessen befüllbarem Volumen anzupassen, da der Verschleiß das befüllbare Volumen des metallurgischen Gefäßes verändert.

Eine weitere Ausgestaltung der Erfindung sieht vor, dass eine Füllstandshöhe der metallischen Schmelze im metallurgischen Gefäß anhand von geometrischen Daten des metallurgischen Gefäßes und Eigenschaften des metallischen Inhalts und der ermittelten Masse der metallischen Schmelze ermittelt wird.

Die Ermittlung der Füllstandshöhe ermöglicht vorteilhaft, den Transport des metallurgischen Gefäßes der Füllstandhöhe anzupassen, um ein Überschwappen der metallischen Schmelze aus dem metallurgischen Gefäß während des Transportes zu verhindern.

Weitere Ausgestaltungen der Erfindung sehen vor, dass das metallurgische Gefäß als eine Stahlpfanne ausgebildet ist, und/oder dass die metallische Schmelze eine Eisen- oder Stahlschmelze ist, und/oder dass das Transportfahrzeug als ein Schienenfahrzeug, insbesondere als ein Ladle Transfer Car oder als ein Schlackenkübeltransportfahrzeug (ein sogenanntes Slagpot Transfer Car), ausgebildet ist.

Diese Ausgestaltungen der Erfindung richten sich auf die üblicherweise verwendeten metallurgischen Gefäße, metallischen Schmelzen und Transportfahrzeuge.

Die Erfindung sieht ferner ein Computerprogramm zur Bestimmung der Masse der metallischen Schmelze mittels des Prozessmodells und einer Bewegungsgleichung des aus dem Transportfahrzeug, dem metallurgischen Gefäß und der metallischen Schmelze bestehenden Systems unter Berücksichtigung von Auslegungsdaten des Transportfahrzeuges zur Durchführung des erfindungsgemäßen Verfahrens vor.

Mittels des Computerprogramms können insbesondere vorteilhaft eine Methode der kleinsten Quadrate oder eine rekursive Methode der kleinsten Quadrate ausgeführt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    schematisch eine Seitenansicht eines mit einem geschnitten dargestellten metallurgischen Gefäß beladenen Transportfahrzeuges,

FIG 2    einen Ergebniswertverlauf einer Berechnung einer Masse eines mit einem metallurgischen Gefäß beladenen Transportfahrzeuges, und

FIG 3    ein Blockdiagramm einer Ermittlung einer Masse einer metallischen Schmelze in einem metallurgischen Gefäß.

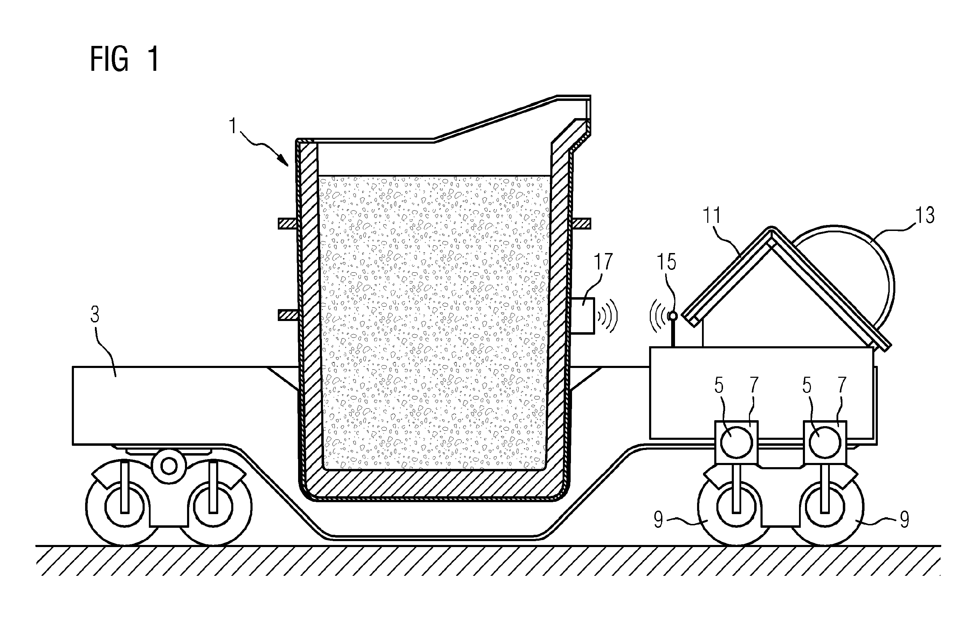

Figur 1 zeigt eine Seitenansicht eines mit einem metallurgischen Gefäß 1 beladenen Transportfahrzeuges 3. Das metallurgische Gefäß 1 ist als eine Stahlpfanne ausgebildet und in einer Schnittdarstellung dargestellt. Das Transportfahrzeug 3 ist als ein Schienenfahrzeug, ein so genanntes Ladle Transfer Car, ausgebildet und weist ein Antriebssystem auf, das wenigstens einen Motor 5, wenigstens ein Getriebe 7 und Antriebsräder 9 umfasst. Ferner weist das Transportfahrzeug 3 antriebsseitig ein Dach 11 sowie optional ein Rad 13 zur Führung einer Kabelschleppleitung auf. Optional weist das Transportfahrzeug 3 ferner ein Gefäßidentifizierungssystem 15 auf und das metallurgische Gefäß 1 weist ein von dem Gefäßidentifizierungssystem 15 lesbares Kennzeichnungselement 17 auf.

Erfindungsgemäß werden Massen des mit dem metallurgischen Gefäß 1 beladenen Transportfahrzeuges 3 ohne und mit einer Befüllung des metallurgischen Gefäßes 1 mit einer metallischen Schmelze ermittelt und daraus die Masse der metallischen Schmelze in dem metallurgischen Gefäß 1 ermittelt.

Die Masse des mit dem metallurgischen Gefäß 1 beladenen Transportfahrzeuges 3 wird jeweils mittels einer Bewegungsgleichung des mit dem unbefüllten oder befüllten metallurgischen Gefäß 1 beladenen Transportfahrzeugs 3 ermittelt. Für eine geradlinige Bewegung eines Transportfahrzeugs 3 mit positiver Geschwindigkeit wird beispielsweise folgende vereinfachte Bewegungsgleichung verwendet:

$$(\theta_{ges} + (m_0 + m_{load}) \cdot R^2) \cdot \ddot{x} = -d_v \cdot \dot{x} + M_{mot} \cdot i \cdot n_{mot} \cdot R - d_c \cdot R - F_R \cdot R^2 \qquad [1]$$

wobei $\theta_{ges}$ die Summe der Massenträgheitsmomente aller Räder des Transportfahrzeuges 3, $m_0$ die Masse des mit dem unbefüllten metallurgischen Gefäß 1 beladenen Transportfahrzeuges 3, $m_{load}$ die Masse der metallischen Schmelze in dem befüllten metallurgischen Gefäß 1, R den Radius jedes der Antriebsräder 9, $\dot{x}$ die Geschwindigkeit des Transportfahrzeuges 3, $\ddot{x}$ die Beschleunigung des Transportfahrzeuges 3, $d_v$ ein mit der Geschwindigkeit eingehendes Reibmoment, $d_c$ ein unabhängig von der Geschwindigkeit eingehendes Reibmoment, $M_{mot}$ ein Motorantriebsmoment eines Motors 5, $i$ eine Getriebeübersetzung eines Getriebes 7, $n_{mot}$ die Anzahl der Motoren 5 und $F_R$ eine Rollreibung bezeichnen. Für negative Geschwindigkeiten wird die Bewegungsgleichung [1] entsprechend angepasst.

Für geringe Geschwindigkeiten und ein als Schienenfahrzeug ausgebildetes Transportfahrzeug 3 können die konstanten Reibungskräfte in der Bewegungsgleichung [1] in guter Näherung vernachlässigt werden und die Bewegungsgleichung [1] kann zu

$$a \cdot \ddot{x} + b \cdot \dot{x} = M_{mot} \qquad [2]$$

vereinfacht werden, wobei *a* und *b* folgendermaßen definiert sind:

$$a = \frac{\theta_{ges} + (m_0 + m_{load}) \cdot R^2}{i \cdot n_{mot} \cdot R}, \quad b = \frac{d_v}{i \cdot n_{mot} \cdot R} .$$

Mittels der vereinfachten Bewegungsgleichung [2] wird die Masse des mit dem metallurgischen Gefäß 1 beladenen Transportfahrzeuges 3 jeweils im unbefüllten und im befüllten Zustand des metallurgischen Gefäßes 1 ermittelt. Dazu werden im unbefüllten und im befüllten Zustand des metallurgischen Gefäßes 1 jeweils während einer beschleunigten Bewegung des Transportfahrzeuges 3 zu mehreren Messzeitpunkten $t_i$ jeweils ein Geschwindigkeitsmesswert $\dot{x}_i$ für die Geschwindigkeit $\dot{x}$, ein Beschleunigungsmesswert $\ddot{x}_i$ für die Beschleunigung $\ddot{x}$ und ein Antriebsmomentenmesswert $M_{mot,i}$ für ein Motorantriebsmoment $M_{mot}$ aufgenommen, wobei der Index $i$ jeweils die verschiedenen Messzeitpunkte indiziert ($i=1,...,n$). Aus den aufgenommenen Messwerten wird jeweils ein Gleichungssystem der Form

$$S \cdot p = y \qquad\qquad\qquad [3]$$

gebildet, wobei $S$, $p$ und $y$ eine aus den jeweils aufgenommenen Geschwindigkeitsmesswerten und Beschleunigungsmesswerten gebildete Matrix $S$, einen unbekannten Spaltenvektor $p$ mit den Komponenten $a$ und $b$ und einen aus den jeweils aufgenommenen Antriebsmomentenmesswerten gebildeten Spaltenvektor $y$ gemäß

$$S = \begin{pmatrix} \ddot{x}_1 & \dot{x}_1 \\ \ddot{x}_2 & \dot{x}_2 \\ \ddot{x}_3 & \dot{x}_3 \\ \vdots & \vdots \\ \ddot{x}_n & \dot{x}_n \end{pmatrix}, \quad p = \begin{pmatrix} a \\ b \end{pmatrix}, \quad y = \begin{pmatrix} M_{mot,1} \\ M_{mot,2} \\ M_{mot,3} \\ \vdots \\ M_{mot,n} \end{pmatrix}$$

bezeichnen. Gleichung [3] wird als ein durch die Vielzahl $n$ der Messzeitpunkte $t_i$ überbestimmtes Gleichungssystem für die Komponenten von $p$ behandelt und durch die so genannte Methode der kleinsten (Fehler-)Quadrate in einer Form

$$p = \left(S^T \cdot S\right)^{-1} \cdot S^T \cdot y \qquad\qquad\qquad [4]$$

nach $p$ gelöst.

Aus der jeweiligen ersten Komponente $a$ der Lösung für $p$ gemäß Gleichung [4] wird im Falle des Transports des unbefüllten metallurgischen Gefäßes 1 ein Wert für die Masse $m_0$ und im Falle des Transports des befüllten metallurgischen Gefäßes 1 ein Wert für die Masse $m_0+m_{load}$ ermittelt. Als Differenz dieser beiden ermittelten Werte wird ein Ergebniswert m für die Masse $m_{load}$ der metallischen Schmelze in dem befüllten metallurgischen Gefäß 1 ermittelt.

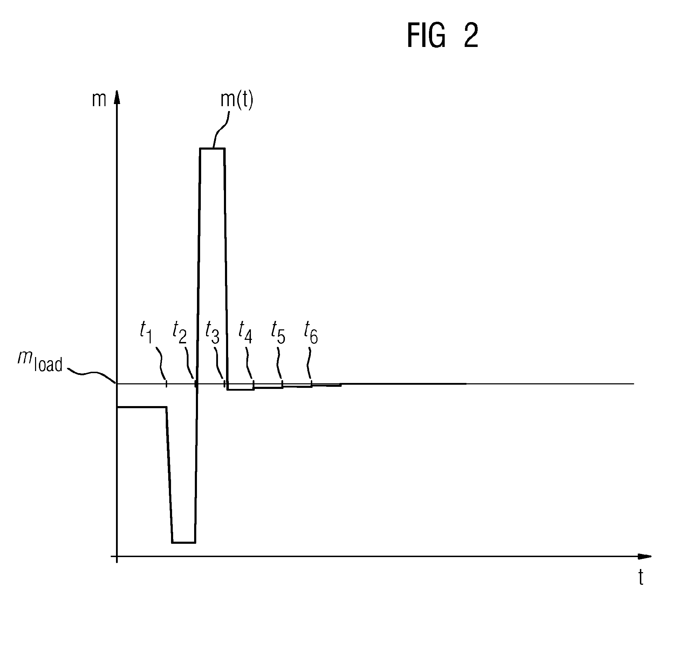

Figur 2 zeigt einen Ergebniswertverlauf m(t) eines ermittelten Ergebniswertes m in Abhängigkeit von einer Zeit t, wobei $t_1$ bis $t_6$ aufeinander folgende Messzeitpunkte bezeichnen, zu denen jeweils ein Geschwindigkeitsmesswert, Beschleunigungsmesswert und Antriebsmomentenmesswert für den Transport des mit metallischer Schmelze befüllten metallurgischen Gefäßes 1 aufgenommen werden. Der Ergebniswert m schwankt nur zu Beginn der Messwertaufnahme stark um die tatsächliche Masse $m_{load}$ der metallischen Schmelze in dem befüllten metallurgischen Gefäß 1, konvergiert danach aber schnell zu dieser tatsächlichen Masse $m_{load}$, so dass er bereits nach einem dritten Messzeitpunkt $t_3$ ein gute Näherung für die tatsächliche Masse $m_{load}$ liefert. Diese schnelle Annäherung des Ergebniswertes m an die tatsächliche Masse $m_{load}$ resultiert daraus, dass mit jedem neuen Messzeitpunkt $t_i$ mehr Messwerte in die Berechnung aufgenommenen werden und durch die wachsende Anzahl von Messwerten auch die Anzahlen der Einträge der Matrix S und des Spaltenvektors y wachsen, wodurch sich der Ergebniswert m schnell der tatsächlichen Masse $m_{load}$ nähert.

Statt der Methode der kleinsten Quadrate kann auch eine bekannte so genannte rekursive Methode der kleinsten Quadrate verwendet werden, bei der neue Messwerte zu einem rekursiven Update des Ergebniswertes m verwendet werden. Diese Methode kann im Gegensatz zur beschriebenen Methode der kleinsten Quadrate auch online, also während der Beschleunigung des Transportfahrzeugs 3 durchführt werden.

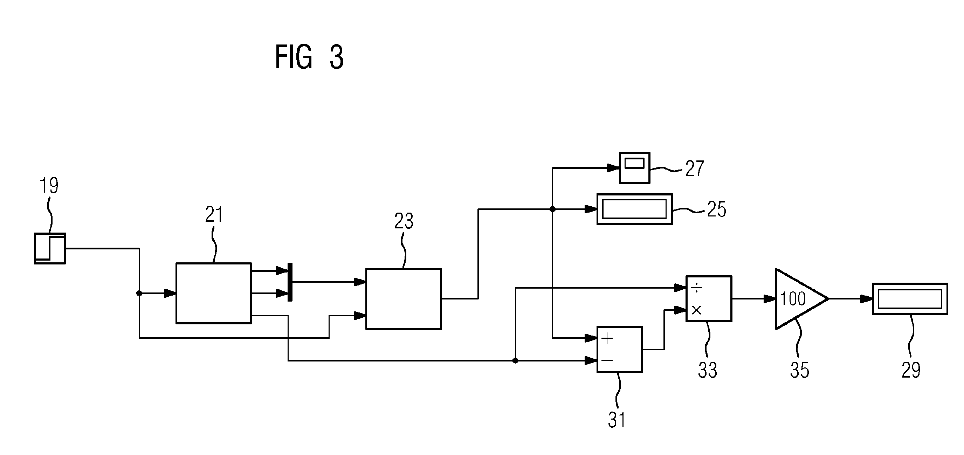

Figur 3 zeigt ein Blockdiagramm einer Ermittlung des Ergebniswertes m für die Masse $m_{load}$ der metallischen Schmelze in einem metallurgischen Gefäß 1.

Dabei werden Antriebsdaten 19, aus denen ein Motorantriebsmoment eines Motors 5 des Transportfahrzeuges 3 ermittelbar ist, einem Prozessmodell 21 zugeführt, das die zur Berechnung des Ergebniswertes m verwendeten Parameter enthält, insbesondere die Geschwindigkeitsmesswerte, Beschleunigungsmesswerte und Auslegungsdaten des Transportfahrzeuges 3 (z. B. die Massenträgheitsmomente und Radien der Räder und die Anzahl der Motoren 5). Mit diesen Parametern und den Antriebsdaten 19 wird eine Ergebnisberechnung 23 des Ergebniswertes m mittels der oben beschriebenen Methode der kleinsten Quadrate oder der rekursiven Methode der kleinsten Quadrate durchgeführt. Der ermittelte Ergebniswert m wird als ein Ausgabewert 25 ausgegeben. Optional werden zusätzlich der in Figur 2 dargestellte zeitliche Ergebniswertverlauf m(t) als ein Ausgabediagramm 27 und/oder eine sich durch die Auswertung weiterer Messwerte ergebende prozentuale Änderung des Ergebniswertes m als ein Änderungswert 29 ermittelt und ausgegeben. Der Änderungswert 29 wird dabei ermittelt, indem zunächst eine Ergebniswertdifferenz 31 zwischen einem aktualisierten Ergebniswert m und einem zuvor ermittelten Ergebniswert m, der jeweils in dem Prozessmodell 21 gespeichert wird, gebildet wird, anschließend ein Quotient 33 aus dieser Ergebniswertdifferenz 31 und dem zuvor ermittelten Ergebniswert m gebildet wird und schließlich ein Produkt 35 des Quotienten 33 mit der Zahl 100 gebildet wird.

Im Folgenden wird beispielhaft ein Ablauf der oben beschriebenen Messwertaufnahme und Massenermittlung beschrieben.

Vor der Messwertaufnahme und Massenermittlung steht das mit dem unbefüllten metallurgischen Gefäß 1 beladene Transportfahrzeug 3 beispielsweise an einem Abgabeort metallischer Schmelze.

Das Transportfahrzeug 3 erhält dann beispielsweise über ein übergeordnetes Leitsystem einen Fahrbefehl, um einen Aufnahmeort zur Aufnahme metallischer Schmelze anzufahren.

Während das Antriebssystem des Transportfahrzeuges 3 den Fahrbefehl umsetzt, werden kontinuierlich die Antriebsdaten 19 sowie die Geschwindigkeits- und Beschleunigungsmesswerte aufgenommen. Die Antriebsdaten 19 und Messwerte werden aus bereits vorhandenen Systemen wie z. B. aus einem einen Motor 5 des Transportfahrzeuges 3 speisenden Frequenzumrichter ausgelesen und/oder es werden zusätzliche Sensoren zur Messwertaufnahme verwendet, beispielsweise am Transportfahrzeug 3 oder in dessen Umgebung angeordnete Bewegungssensoren zur Ermittlung der Geschwindigkeits- und Beschleunigungsmesswerte. Als Antriebsdaten 19 werden zumindest ein Motorstrom und eine Motordrehzahl und/oder eine insgesamt aufgenommene Leistung des Antriebssystems erfasst, um daraus Motorantriebsmomente zu ermitteln. Eine Fahrzeugsteuerung berechnet aus den aufgenommenen Messdaten und fahrzeugspezifischen Auslegungsdaten mittels der oben beschriebenen Methode einen Wert für die Masse $m_0$ des mit dem unbefüllten metallurgischen Gefäß 1 beladenen Transportfahrzeuges 3.

Nach dem Erreichen des Aufnahmeortes erfolgt die Befüllung des metallurgischen Gefäßes 1 mit metallischer Schmelze. Sollte dabei ein Nachführen des Transportfahrzeuges 3 in der Aufnahmeposition notwendig sein (z. B. um die metallische Schmelze während des Abstichs aus dem drehenden Konvertergefäß mittig in dem metallurgischen Gefäß 1 aufzunehmen), kann bereits dort eine Massenermittlung erfolgen.

Nach Beendigung des Befüllens des metallurgischen Gefäßes 1 erhält die Fahrzeugsteuerung den Befehl, den Aufnahmeort zu verlassen und den Abgabeort anzufahren. Während der folgenden Beschleunigung des mit dem befüllten metallurgischen Gefäß 1 beladenen Transportfahrzeuges 3 wird ein Wert für dessen Masse $m_0+m_{load}$ analog zur Ermittlung des Wertes für die Masse $m_0$ des mit dem unbefüllten metallurgischen Gefäß 1 beladenen Transportfahrzeuges 3 ermittelt. Die Differenz der ermittelten Werte für $m_0+m_{load}$ und $m_0$ ist der Ergebniswert m für die Masse der metallischen Schmelze in dem befüllten metallurgischen Gefäß 1. Der Ergebniswert m kann an ein Automatisierungs- oder Datenverarbeitungssystem übermittelt werden oder einem Bediener direkt über eine grafische Benutzerschnittstelle oder eine Anzeige angezeigt werden.

Die Algorithmen zur Berechnung der unbekannten Masse können entweder in die Fahrzeugsteuerung oder in ein übergeordnetes Automatisierungssystem implementiert sein. Die Fahrzeugsteuerung kann in dem Transportfahrzeug 3 oder außerhalb des Transportfahrzeuges 3 angeordnet sein.

Das Gefäßidentifizierungssystem 15 dient der Identifizierung und Unterscheidung metallurgischer Gefäße 1. Dazu wird jedes metallurgische Gefäß 1 mit einem es eindeutig kennzeichnenden Kennzeichnungselement 17 versehen, das von dem Gefäßidentifizierungssystem 15 lesbar ist. Beispielsweise werden als Kennzeichnungselemente 17 RFID-Transponder (RFID = Radio Frequency Identification) oder QR-Codes (= Quick Response Codes) und als Gefäßidentifizierungssysteme 15 entsprechende Lesegeräte verwendet. Dadurch können jedem metallurgischen Gefäß 1 die für dieses metallurgische Gefäß 1 ermittelten Werte für die Masse $m_0$ zugeordnet werden. Diese gefäßspezifischen Werte werden dem übergeordneten Automatisierungs- oder Datenverarbeitungssystem übermittelt und von diesem ausgewertet. Durch Kenntnis oder Ermittlung der Masse des unbeladenen Transportfahrzeuges 3 kann bei jedem Einsatz eines metallurgischen Gefäßes 1 dessen Leergewicht ermittelt und somit vorteilhaft kontinuierlich ein Ausmauerungszustand dieses metallurgischen Gefäßes 1 verfolgt und überwacht werden.

Anhand der geometrischen Daten des metallurgischen Gefäßes 1 und der Eigenschaften des metallischen Inhalts und des ermittelten Ergebniswertes m für die Masse $m_{load}$ der metallischen Schmelze in dem metallurgischen Gefäß 1 kann ferner eine Füllstandshöhe der metallischen Schmelze in dem metallurgischen Gefäß 1 ermittelt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | metallurgisches Gefäß |
| 3 | Transportfahrzeug |
| 5 | Motor |
| 7 | Getriebe |
| 9 | Antriebsrad |
| 11 | Dach |
| 13 | Führungsrad |
| 15 | Gefäßidentifizierungssystem |
| 17 | Kennzeichnungselement |
| 19 | Antriebsdaten |
| 21 | Prozessmodell |
| 23 | Ergebnisberechnung |
| 25 | Ausgabewert |
| 27 | Ausgabediagramm |
| 29 | Änderungswert |
| 31 | Ergebniswertdifferenz |
| 33 | Quotient |
| 35 | Produkt |
| m | Ergebniswert |
| m(t) | Ergebniswertverlauf |
| $m_{load}$ | Masse der metallischen Schmelze |
| t | Zeit |
| $t_1$ bis $t_6$ | Messzeitpunkt |

**Patentansprüche**

1. Verfahren zur Bestimmung der Masse ($m_{load}$) einer metallischen Schmelze in einem zur Aufnahme der metallischen Schmelze geeigneten metallurgischen Gefäß (1), umfassend die Verfahrensschritte:

   - Ermittlung von Parametern eines mit dem unbefüllten metallurgischen Gefäß (1) beladenen Transportfahrzeuges (3) während einer Beschleunigung des Transportfahrzeuges (3), wobei die Parameter wenigstens eine Geschwindigkeit des Transportfahrzeuges (3), eine Beschleunigung des Transportfahrzeuges (3) und ein Motorantriebsmoment des Transportfahrzeuges (3) umfassen,
   - Ermittlung der Parameter des mit dem mit der metallischen Schmelze befüllten metallurgischen Gefäß (1) beladenen Transportfahrzeuges (3) während einer Beschleunigung des Transportfahrzeuges (3),
   - Übergabe der Parameter an ein Prozessmodell (21) und Bestimmung der Masse ($m_{load}$) der metallischen Schmelze mittels des Prozessmodells (21) und einer Bewegungsgleichung des aus dem Transportfahrzeug (3), dem metallurgischen Gefäß (1) und der metallischen Schmelze bestehenden Systems unter Berücksichtigung von Auslegungsdaten des Transportfahrzeuges (3).

2. Verfahren nach Anspruch 1,
   **dadurch gekennzeichnet, dass** zur Ermittlung des Motorantriebsmomentes ein Motorstrom und/oder eine Motorspannung und/oder eine Motorleistung des Transportfahrzeuges (3) und eine Motordrehzahl des Transportfahrzeuges (3) gemessen oder aus Frequenzumrichterdaten des Transportfahrzeuges (3) ausgelesen werden.

3. Verfahren nach einem der Ansprüche 1 oder 2,

**dadurch gekennzeichnet, dass** die Parameter während der Beschleunigung des Transportfahrzeuges (3) mehrmalig ermittelt werden.

4. Verfahren nach einem der vorhergehenden Ansprüche,
**dadurch gekennzeichnet, dass** die Masse ($m_{load}$) der metallischen Schmelze während einer Bewegung des mit dem mit der metallischen Schmelze befüllten metallurgischen Gefäß (1) beladenen Transportfahrzeuges (3) bestimmt wird.

5. Verfahren nach einem der vorhergehenden Ansprüche,
**dadurch gekennzeichnet, dass** die Masse ($m_{load}$) der metallischen Schmelze mittels des Prozessmodells (21) und der Bewegungsgleichung mit einer Methode der kleinsten Quadrate oder einer rekursiven Methode der kleinsten Quadrate bestimmt wird.

6. Verfahren nach einem der vorhergehenden Ansprüche,
**dadurch gekennzeichnet, dass** die Masse des unbefüllten metallurgischen Gefäßes (1) bestimmt wird und/oder die Masse des unbeladenen Transportfahrzeuges (3) bestimmt wird.

7. Verfahren nach Anspruch 6,
**dadurch gekennzeichnet, dass** ein Identifizierungssystem (15) verwendet wird, mittels dessen einem metallurgischen Gefäß (1) eine für das unbefüllte metallurgischen Gefäß (1) ermittelte Masse zugeordnet wird.

8. Verfahren nach Anspruch 7,
**dadurch gekennzeichnet, dass** mittels des Identifizierungssystems (15) ein Verschleiß des metallurgischen Gefäßes (1) überwacht wird.

9. Verfahren nach einem der vorhergehenden Ansprüche,
**dadurch gekennzeichnet, dass** eine Füllstandshöhe der metallischen Schmelze im metallurgischen Gefäß (1) anhand von geometrischen Daten des metallurgischen Gefäßes (1) und Eigenschaften des metallischen Inhalts und der ermittelten Masse ($m_{load}$) der metallischen Schmelze ermittelt wird.

10. Verfahren nach einem der vorhergehenden Ansprüche,
**dadurch gekennzeichnet, dass** das metallurgische Gefäß (1) als eine Stahlpfanne ausgebildet ist.

11. Verfahren nach einem der vorhergehenden Ansprüche,
**dadurch gekennzeichnet, dass** die metallische Schmelze eine Eisen- oder Stahlschmelze ist.

12. Verfahren nach einem der vorhergehenden Ansprüche,
**dadurch gekennzeichnet, dass** das Transportfahrzeug (3) als ein Schienenfahrzeug, insbesondere als ein Ladle Transfer Car oder als ein Schlackenkübeltransportfahrzeug, ausgebildet ist.

13. Computerprogramm zur Bestimmung der Masse ($m_{load}$) der metallischen Schmelze mittels des Prozessmodells (21) und einer Bewegungsgleichung des aus dem Transportfahrzeug (3), dem metallurgischen Gefäß (1) und der metallischen Schmelze bestehenden Systems unter Berücksichtigung von Auslegungsdaten des Transportfahrzeuges (3) in einem Verfahren gemäß einem der vorhergehenden Ansprüche.

14. Computerprogrammprodukt mit einem Computerprogramm gemäß Anspruch 13.

EP 2 930 478 A1

**FIG 1**

# FIG 2

FIG 3

Europäisches
Patentamt

European
Patent Office

Office européen
des brevets

**EUROPÄISCHER RECHERCHENBERICHT**

Nummer der Anmeldung

EP 14 16 3705

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/238298 A1 (JUNG JONG CHUL [KR] ET AL) 12. September 2013 (2013-09-12) <br> * Absatz [0013] - Absatz [0023] * <br> * Absatz [0030] * <br> * Absatz [0049] - Absatz [0082] * <br> * Ansprüche 1, 3, 7, 8 * <br> * Abbildungen 1-5 * <br> ----- | 1-14 | INV. <br> G01G17/04 <br> G01G19/08 <br><br> ADD. <br> G01G19/04 |
| A | US 4 878 551 A (WATKINS DONALD M [US] ET AL) 7. November 1989 (1989-11-07) <br> * Spalte 1, Zeile 36 - Spalte 2, Zeile 14 * <br> * Spalte 3, Zeile 67 - Spalte 5, Zeile 7 * <br> * Abbildungen 1-5 * <br> ----- | 1-14 | |

RECHERCHIERTE
SACHGEBIETE (IPC)

G01G

Der vorliegende Recherchenbericht wurde für alle Patentansprüche erstellt

| Recherchenort | Abschlußdatum der Recherche | Prüfer |
|---|---|---|
| Den Haag | 22. Mai 2014 | Koch, Florian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 16 3705

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2014

| Im Recherchenbericht angeführtes Patentdokument | Datum der Veröffentlichung | Mitglied(er) der Patentfamilie | Datum der Veröffentlichung |
|---|---|---|---|
| US 2013238298 A1 | 12-09-2013 | CN 103308131 A<br>KR 20130103935 A<br>US 2013238298 A1 | 18-09-2013<br>25-09-2013<br>12-09-2013 |
| US 4878551 A | 07-11-1989 | KEINE | |

EPO FORM P0461

Für nähere Einzelheiten zu diesem Anhang : siehe Amtsblatt des Europäischen Patentamts, Nr.12/82